# EUROPÄISCHE PATENTSCHRIFT

(11) **EP 1 124 870 B1**
(45) Veröffentlichungstag und Bekanntmachung des Hinweises auf die Patenterteilung: **14.07.2004**
(21) Anmeldenummer: 99952567.8
(22) Anmeldetag: 14.10.1999
(51) Int. Cl.: C08F 255/02, C08F 291/00

(54) **VERNETZBARE POLYMERE, VERFAHREN ZU DEREN HERSTELLUNG UND FORMKÖRPER AUS VERNETZTEN POLYMEREN**
CROSS-LINKABLE POLYMERS, METHOD FOR THE PRODUCTION THEREOF, AND SHAPED BODIES MADE OF CROSS-LINKED POLYMERS
POLYMERES RETICULABLES, LEUR PROCEDE DE PRODUCTION ET CORPS MOULES CONSTITUES DE POLYMERES RETICULES

(30) Priorität: 21.10.1998 DE 19848351
(43) Veröffentlichungstag der Anmeldung: 22.08.2001
(73) Patentinhaber: Degussa Aktiengesellschaft, 40474 Düsseldorf (DE)
(72) Erfinder: LAVEN, Ralf, D-60439 Frankfurt (DE); EDELMANN, Roland, D-79664 Wehr (DE); FRINGS, Albert-Johannes, D-79618 Rheinfelden (DE); HORN, Michael, D-79618 Rheinfelden (DE); JENKNER, Peter, D-79618 Rheinfelden (DE); MACK, Helmut, D-79618 Rheinfelden (DE); MONKIEWICZ, Jaroslaw, D-79618 Rheinfelden (DE); STANDKE, Burkhard, D-79540 Lörrach (DE)
(86) Internationale Anmeldenummer: PCT/EP1999/007729
(87) Internationale Veröffentlichungsnummer: WO 2000/023486

(56) Entgegenhaltungen:
- EP-A- 0 518 057
- EP-A- 0 827 994
- WO-A-90/07542
- WO-A-98/21252

## Beschreibung

Die Erfindung betrifft vernetzbare Polymere, die hydrolysierbare Silangruppen enthalten, sowie ein Verfahren zu deren Herstellung durch eine Pfropfreaktion. Die Erfindung betrifft weiterhin ein Verfahren zur Herstellung von Formkorpern durch Formgebung und Vernetzung der vernetzbaren Polymeren. Die Erfindung betrifft schließlich die so hergestellten Formkörper.

### 1. Stand der Technik

Formkörper aus vernetzten Polymeren zeichnen sich u. a. durch gute mechanische Eigenschaften, hohe Thermostabilität und gute Beständigkeit gegenüber chemischen und physikalischen Einwirkungen aus. Zur Herstellung solcher Formkörper geht man von einem vernetzbaren Polymer aus, bringt dieses in die gewünschte Form und vernetzt es. Ein bekanntes Verfahren verwendet Standardpolymere, die nach der Formgebung durch Elektronenstrahlen vernetzt werden. Dieses Verfahren ist apparativ aufwendig und erfordert umfangreiche Strahlenschutzmaßnahmen. Weiterhin lassen sich Standardpolymere durch Erhitzen mit einem Radikalbildner vemetzen. Dieses Verfahren ist energieaufwendig und erlaubt nur niedrige Ausstoßraten.

Ein anderes, unter der Bezeichnung SIOPLAS bekannt gewordenes Verfahren ist in US-A-3,646,155 beschrieben. Dabei werden in einer ersten Stufe Polyolefine bei einer Temperatur von >140 °C in Gegenwart eines Radikalbildners mit einem ungesättigten hydrolysierbaren Silan (d. h. einem Silan mit mindestens einem hydrolysierbaren Substituenten) umgesetzt, zweckmäßig in einem Schneckenextruder. Es entsteht ein gepfropftes Polyolefin mit hydrolysierbaren Silangruppen, die an Seitenketten stehen. In einer zweiten Stufe werden die hydrolysierbaren Silangruppen durch Einwirkung von Wasser hydrolysiert und die entstandenen Silanolgruppen unter dem Einfluß eines Katalysators kondensiert Nach der Schrift kann der Kondensationskatalysator vor, während oder nach der Pfropfreaktion zugefügt werden Vorzugsweise wird der Katalysator dem vernetzbaren Polyolefin unmittelbär vor der Formgebung zugesetzt, vorteilhaft in Form eines Masterbatches aus dem unmodifizierten Polyolefin und dem Katalysator, der mit dem vernetzbaren Polyolefin homogenisiert wird Bei dieser Arbeitsweise kann die Herstellung des vernetzbaren Polyolefins beim Rohstoffhersteller und die Vermischung mit dem Katalysator beim Hersteller der Formkörper erfolgen.

Das aus US-A-4,117,195 bekannt gewordene MONOSIL-Verfahren entspricht weitgehend dem SIOPLAS-Verfahren nach US-A-3,646, 155, jedoch wird der Kondensationskatalysator schon bei der Pfropfreaktion zugesetzt und das so katalysierte vernetzbare Polymer unmittelbar anschließend zu einem Formkorper geformt und vernetzt Dieses Verfahren wird vollständig beim Hersteller der Formkörper ausgeübt.

Bei dem sogenannten COPO-Verfahren nach Jap. Kokai Tokkyo Koho 80 155,040 (Mitsubishi Petrochemical) werden die vernetzenden Silangruppen nicht durch Pfropfung eingeführt, sondern ein Olefin und ein olefinisch ungesättigtes hydrolysierbares Silan werden in Gegenwart eines Silankondensationskatalysators radikalisch initiiert zu einem vernetzbaren Copolymer polymerisiert. Die vernetzenden Silangruppen stehen an der Polymerhauptkette. Die Vernetzung erfolgt wiederum durch Hydrolyse und nachfolgende katalysierte Silanolkondensation.

Nach EP-B1-0 351 241, EP-A2-0 245 938 und W0 90/07542 kann bei allen drei genannten Verfahren schon bei der Herstellung des Silangruppen enthaltenden Polymers und noch vor der geplanten Vernetzungsreaktion eine vorzeitige Vernetzung eintreten, die nach den beiden erstgenannten Schriften zu Schwierigkeiten bei der Herstellung der Formkorper oder zu Formkörpern mit unbefriedigenden physikalischen und mechanischen Eigenschaften führt. Die vorzeitige Vernetzung sei besonders nachteilig bei der Herstellung von Draht- und Kabelisolierungen. Nach der ersten der 3 genannten Veröffentlichungen kann man der vorzeitigen Vernetzung entgegenwirken, indem man dem vernetzbaren Polymer einen Ester des Dipentaerythrits mit einer oder mehreren C₄- bis C₈-Carbonsäuren sowie einen organometallischen Silanolkondensationskatalysator zusetzt. Die zweite genannte Veröffentlichung beschreibt den Zusatz von mindestens 2 Gew.-% eines Füllstoffs sowie eines oder mehrerer Wasser abfangender Stoffe, nämlich eines organischen Orthoesters, eines organischen Ketals oder Acetals oder eines Siloxans (unzutreffend als "Silan" bezeichnet) der Formel

R₉R₁₀R₁₁-Si-[OSiR₁₂R₁₃]R₁₄,

in der R₉, R₁₀, R₁₁, R₁₂, R₁₃ und R₁₄ gleich oder verschieden sind und für Wasserstoff, einen Kohlenwasserstoff- oder einen Oxykohlenwasserstoffrest stehen.

Nach der erwähnten Veröffentlichung WO 90/07542 führt eine vorzeitige Vernetzung zu einer Gelierung und Haftung des Gels auf den Oberflächen der Apparate. Es bilden sich klebrige Ablagerungen, mit der Gefahr einer Verstopfung, so daß nach relativ kurzer Zeit eine mechanische und daher zeitaufwendige Reinigung des Extruders erforderlich wird. Wenn das vernetzbare Polymer zur Herstellung von Kabeln durch Ummantelung von Drähten verwendet wird, haftet das vernetzte Polymer relativ fest auf dem Metall, so daß sich die Ummantelung nicht leicht abziehen läßt, was z. B. bei Anschlußarbeiten nachteilig ist. Ein weiterer auf vorzeitige Vernetzung zurückgehender Nachteil besteht darin, daß Gelteilchen im Formkörper Klumpen bilden, die im Fall von dünnen Schichten, wie Filmen und Folien, das Produkt in den meisten Fällen unbrauchbar machen Nach dem Vorschlag der WO 90/07542 wirkt man der vorzeitigen Vernetzung entgegen, indem man ein Silan der allgemeinen Formel

R¹(SiR² ₙX₃₋ₙ)ₘ

mitverwendet. In der Formel bedeutet
- R¹: einen einwertigen Kohlenwasserstoffrest mit 13 bis 30 Kohlenstoffatomen oder einen zweiwertigen Kohlenwasserstoffrest mit 4 bis 24 Kohlenstoffatomen,
- R²: gleiche oder verschiedene Kohlenwasserstoffreste mit 1 bis 10 Kohlenstoffatomen,
- X: gleiche oder verschiedene hydrolysierbare Reste,
- n: 0, 1 oder 2 und
- m: 1 oder 2

Das vernetzbare Polymer kann ein hydrolysierbare Silangruppen enthaltendes Copolymer oder Pfropfpolymer sein. Das Silan der Formel I kann fest oder flüssig sein und wird in jedem Fall in das fertige vernetzbare Polymer eingearbeitet. Im Falle eines Feststoffs kann dies durch homogene Verteilung geschehen, z. B. in einem Extruder. Im Falle von Flüssigkeiten kommt zusätzlich die Einarbeitung durch Imprägnieren in Betracht

### 2. Kurzbeschreibung der Erfindung

Ein Gegenstand der Erfindung ist ein Verfahren zur Herstellung von vernetzbaren Silangruppen mit mindestens einem hydrolysierbaren Rest enthaltenden Polymeren durch radikalisch initiierte Pfropfung der Basispolymeren mit einem olefinisch ungesättigten Silan mit mindestens einem hydrolysierbaren Rest, bei dem man die Pfropfung in Gegenwart
(a) eines Alkylsilans der Formel I,

   R¹(SiR² ₙX₃₋ₙ)ₘ, (I)

   in der
   - R¹: einen einwertigen Kohlenwasserstoffrest mit 1 bis 33 Kohlenstoffatomen oder einen zweiwertigen Kohlenwasserstoffrest mit 4 bis 24 Kohlenstoffatomen,
   - R²: einen Kohlenwasserstoffrest mit 1 bis 10 Kohlenstoffatomen,
   - X: gleiche oder verschiedene hydrolysierbare Reste,
   - n: 0,1 oder 2 und
   - m: 1 oder 2 bedeutet,
   und
   eines Fluoralkylsilans der allgemeinen Formel

   R³ ₓSiR⁴ _{y}X_{z}, (II)

   in der
   - R³: einen Fluoralkylrest,
   - R⁴: einen Alkylrest und
   - X: einen hydrolysierbaren Rest bedeutet,
   - x: für eine ganze Zahl von 1 bis 3,
   - y: für 0, 1 oder 2 und
   - z: für eine ganze Zahl von 1 bis 3 steht,
   mit der Maßgabe, daß die Summe x + y + z = 4 ist,
   oder
(b) in Gegenwart eines Fluoralkylsilans der allgemeinen Formel (II)
durchführt.

Ein anderer Gegenstand der Erfindung sind die nach dem erfindungsgemäßen Verfahren erhältlichen vernetzbaren, Silangruppen mit mindestens einem hydrolysierbaren Rest sowie ein Alkylsilan (a) und/oder ein Fluoralkylsilan (b) enthaltenden Polymeren

Ein weiterer Gegenstand der Erfindung ist ein Verfahren zur Herstellung von Formkörpern auf der Basis von über Siloxanbrücken (-Si-O-Si-) vernetzten Polymeren, bei dem man die in die gewünschte Form gebrachten erfindungsgemäßen vernetzbaren, Silangruppen mit mindestens einem hydrolysierbaren Rest enthaltenden Polymeren mit Wasser behandelt.

Ein weiterer Gegenstand der Erfindung sind schließlich die auf diese Weise erhältlichen Formkorper.

### 3. Vorteile der Erfindung

Im Gegensatz zu der Lehre von WO 90/07542 werden das Alkylsilan I und bzw. oder das Fluoralkylsilan II nicht nachträglich in das vorgebildete vernetzbare, Silangruppen mit mindestens einem hydrolysierbaren Rest enthaltende Polymer eingearbeitet, sondern werden bereits bei dessen Herstellung zugesetzt. Dadurch wird ein Arbeitsgang eingespart, und die erwähnte Bildung von klebrigen Ablagerungen auf den Oberflachen der Apparate wahrend der Pfropfreaktion wird deutlich zurückgedrangt. Dementsprechend werden die Betriebsintervalle verlängert, und die Apparatur muß nicht so oft mechanisch und damit arbeitsintensiv gereinigt werden. Auch bei der weiteren Anwendung der vernetzbaren Polymere entstehen weniger klebrige Ablagerungen als bei Polymeren ohne die Additive gemäß (a) und/oder (b). Dies ist ein Vorteil beispielsweise bei der Herstellung von Kabeln durch Ummantelung von Kupfer- oder Aluminiumleitern. Dabei ist die Haftung des vernetzten polymeren Isoliermaterials auf dem Leiter unerwünscht, weil sie bei der späteren Verarbeitung ("Abisolierung") hinderlich ist.

### 4. Beschreibung der Erfindung

Als thermoplastische Basispolymere kommen insbesondere Polyolefine, wie Polyethylen in seinen verschiedenen Varianten (PE-HD, PE-MD, PE-LD, PE-LLD, PE-VLD und Metallocen-PE), oder Copolymere des Ethylens mit einem oder mehreren Comonomeren, wie alpha-Olefinen, z. B. Propylen, 1-Buten, 1-Hexen, 1-Octen und 4-Methyl-1-penten; Vinylestern, z. B Vinylacetat und Vinylpropionat; Acryl- oder Methacrylsäureester, z. B. Methyl(meth)acrylat, Ethyl(meth)acrylat, Butyl(meth)acrylat und 2-Ethylhexyl(meth)acrylat; olefinisch ungesättigte Carbonsäuren oder Carbonsäureanhydride, wie (Meth)acrylsäure, Maleinsäure, Fumarsäure und Maleinsäureanhydrid; Derivate von olefinisch ungesättigten Carbonsauren, z. B. (Meth)acrylnitril oder (Meth)acrylamid; Vinylether, z. B. Vinylmethylether, Vinylbutylether und Vinylphenylether; sowie vinylaromatische Verbindungen, wie Styrol und alpha-Methylstyrol. Auf die Comonomeren des Ethylens entfallen vorteilhaft bis zu 40 Gew.-%, insbesondere 1 bis 25 Gew.-% des Copolymers. Die Basispolymere haben vorteilhaft Schmelz- oder Erweichungspunkte von 90 bis 120 °C, so daß sie unter den Bedingungen der Pfropfung, die im allgemeinen bei 120 bis 220 °C erfolgt, als mehr oder minder hochviskose Schmelzen vorliegen

Das zur Pfropfung eingesetzte Silan enthalt einen olefinisch ungesättigten Rest und mindestens einen hydrolysierbaren Rest, vorteilhaft 3 hydrolysierbare Reste. Es entspricht der allgemeinen Formel

R⁵SiR⁶ _{3-z}X_{z} , (III)

in der
- R⁵: einen olefinisch ungesättigten Rest,
- R⁶: einen Alkylrest und
- X: einen hydrolysierbaren Rest bedeutet und
- z: für eine ganze Zahl von 1 bis 3 steht.

Der olefinisch ungesättigte Rest R⁵ kann z. B ein Alkenylrest mit 2 bis 6 Kohlenstoffatomen sein, wie Allyl, Methallyl oder 2-Butenyl, und ist vorteilhaft ein Vinylrest. Andere geeignete olefinisch ungesättigte Reste R⁵ sind (Meth)acryloxyalkylreste mit 5 bis 10 Kohlenstoffatomen. R⁶ steht vorzugsweise für einen Alkylrest mit 1 bis 8 Kohlenstoffatomen, insbesondere mit 1 bis 4 Kohlenstoffatomen. Bevorzugte hydrolysierbare Reste X sind Alkoxyreste mit 1 bis 5 Kohlenstoffatomen, insbesondere Ethoxy- oder Methoxyreste. Andere geeignete hydrolysierbare Reste sind z. B. Acyloxyreste von aliphatischen Carbonsäuren, insbesondere von Fettsäuren, mit 2 bis 6 Kohlenstoffatomen sowie Chlor- oder Bromatome. Von den geeigneten Silanen mit olefinisch ungesättigten und hydrolysierbaren Resten seien Vinyltrimethoxysilan, Vinyltriethoxysilan, Vinylbismethoxy-ethoxysilan, Vinyltriacetoxysilan, gamma-Acryloxypropyltrimethoxysilan, gamma-Methacryloxypropyltrimethoxysilan und gamma-Methacryloxypropyltriethoxysilan genannt.

Das zur Pfropfung dienende Silan III wird nur in geringen Mengen eingesetzt. Vorteilhaft entfällt 1 Äquivalent Silan auf 100 bis 10.000, insbesondere auf 500 bis 2.000 Äquivalente der repetierenden Einheiten des Polymers

Ein wesentliches Merkmal der Erfindung besteht darin, daß man die Pfropfreaktion in Gegenwart
(a) eines Alkylsilans der allgemeinen Formel I und/oder
(b) eines Fluoralkylsilans der allgemeinen Formel II
durchführt.

In dem Alkylsilan der allgemeinen Formel I

R¹(SiR² ₙX₃₋ₙ)ₘ (I)

bedeutet
- R¹: einen einwertigen Kohlenwasserstoffrest mit 1 bis 33, vorzugsweise mit 3 bis 18 und insbesondere 6 bis 12 Kohlenstoffatomen oder einen zweiwertigen Kohlenwasserstoffrest mit 4 bis 24, vorteilhaft mit 8 bis 16 und insbesondere mit 6 bis 12 Kohlenstoffatomen,
- R²: gleiche oder verschiedene Kohlenwasserstoffreste, insbesondere Alkylreste, mit 1 bis 20, vorteilhaft mit 1 bis 10 und insbesondere mit 1 bis 7 Kohlenstoffatomen, oder Phenylreste,
- X: gleiche oder verschiedene hydrolysierbare Reste, vorteilhaft Alkoxyreste mit 1 bis 5 Kohlenstoffatomen, insbesondere Ethoxy- oder Methoxyreste, oder Acyloxyreste von Carbonsäuren, insbesondere von Fettsäuren, mit 2 bis 6 Kohlenstoffatomen, oder Chlor- oder Bromatome,
- n: 0, 1 oder 2 und
- m: 1 oder 2 und vorzugsweise 1.

Die Alkylsilane I sind im allgemeinen bei Raumtemperatur flüssig und sieden oberhalb von 200 °C, so daß sie bei den Temperaturen, bei denen die Pfropfung der Basispolymeren und die Formgebung der vernetzbaren Polymeren stattfindet, einen relativ geringen Dampfdruck haben, jedenfalls nicht sieden

Von den geeigneten Alkylsilanen I seien z B n-Octyltriethoxysilan, Tetradecyltrimethoxysilan, Hexadecyltriethoxysilan, Hexadecyltrimethoxysilan, Hexadecyltriacetoxysilan, Methyl-hexadecyldiacetoxysilan, Methyl-hexadecyldimethoxysilan, Octadecyltrimethoxysilan, Octadecyltrichlorsilan, Octadecyltriethoxysilan und 1,12-Bis-trimethoxysilyldodecan genannt.

In dem Fluoralkylsilan der allgemeinen Formel II

R³ ₓSiR⁴ _{y}X_{z} (II)

bedeutet
- R³: gleiche oder verschiedene mono-, oligo- oder perfluorierte Alkylreste, vorteilhaft mit 1 bis 12, insbesondere mit 1 bis 9 Kohlenstoffatomen, gegebenenfalls mit einem Sauerstoff- oder Schwefelatom in der Kohlenstoffkette,
- R⁴: gleiche oder verschiedene Alkylreste mit 1 bis 20 Kohlenstoffatomen, vorteilhaft mit 1 bis 10, insbesondere mit 1 bis 7 Kohlenstoffatomen, oder gleiche oder verschiedene Arylreste, insbesondere Phenylreste
- X: gleiche oder verschiedene hydrolysierbare Reste, vorteilhaft Alkoxyreste mit 1 bis 5 Kohlenstoffatomen, insbesondere Ethoxy- oder Methoxyreste, oder Acyloxyreste von Carbonsäuren, insbesondere von Fettsäuren, mit 2 bis 6 Kohlenstoffatomen, oder Chlor- oder Bromatome,
- x: eine ganze Zahl von 1 bis 3,
- y: 0, 1 oder 2 und
- z: eine ganze Zahl von 1 bis 3,
mit der Maßgabe, daß die Summe x + y + z = 4 ist.

Geeignete Fluoralkylsilane sind u. a. 2-Fluorethyltrimethoxysilan, 2-Fluorethyltrichlorsilan, Perfluorpropyltrimethoxysilan, Perfluorpropyltriacetoxysilan, Bisperfluorpropyl-dimethoxysilan, Perfluorpropyl-methyl-diacetoxysilan, Perfluorpropyl-methyldimethoxysilan, und 3,3,4,4,5,5,6,6,7,7,8,8,8-Tridecafluortrimethoxysilan.

Die Additive I und/oder II werden zweckmäßig in Mengen von 0,001 bis 15 Gew.-%, vorteilhaft von 0,1 bis 5 Gew.-% und insbesondere von 0,1 bis 3 Gew.-%, bezogen auf das Basispolymer, angewandt Die optimale Menge hängt u. a. von dem jeweiligen Basispolymer und dem gewählten Additiv ab und läßt sich durch orientierende Versuche unschwer ermitteln.

Die Pfropfreaktion wird durch freie Radikale initiiert, die von Radikalbildnern geliefert werden, deren Zerfallstemperatur die Temperatur der Pfropfungsreaktion bestimmt. Geeignete Radikalbildner sind Peroxide, wie Dibenzoylperoxid, Dicumylperoxid, Ditert-butylperoxid, Tert.-Butylcumylperoxid, Bis-tert. -butylperoxyisopropylbenzol, Bistert-butylperoxydimethylhexan- oder -hexin; sowie Azoverbindungen, wie Azoisobutyronitril. Der Radikalbildner wird im allgemeinen in Mengen von 0,01 bis 0,2 Gew.-%, bezogen auf das Basispolymer, eingesetzt.

Die Vernetzung des silylierten Polymers findet durch Hydrolyse der Silangruppen und Silanolkondensation statt. Sie wird durch Katalysatoren beschleunigt, die diese Reaktionen fordern. Bekannte Katalysatoren sind Carbonsäuresalze verschiedener Metalle, wie Zinn, Zink, Eisen, Blei und Kobalt, und organische Basen. Im einzelnen seien Salze, wie Dibutylzinndilaurat, Dibutylzinndiacetat, Dioctylzinndilaurat, Zinn(II)-acetat, Bleinaphthenat, Zinkcaprylat und Cobaltnaphthenat; Amine, wie Ethylamine, Dibutylamin, Hexylamine und Pyridin; anorganische Säuren, wie Schwefelsäure und Chlorwasserstoff; und organische Säuren, wie para-Toluolsulfonsäure, Essigsäure und Maleinsäure, erwähnt. Zinnsalze von Carbonsäuren werden bevorzugten. Die Katalysatoren werden zweckmäßig schon in den Ansatz für die Pfropfungsreaktion eingeführt und vorteilhaft in Mengen von 0,01 bis 0,1 Gew.-%, vorzugsweise von 0,02 bis 0,05 Gew.-%, bezogen auf das Basispolymer, eingesetzt.

Etwaige weitere bekannte Hilfs- oder Zusatzstoffe, wie Füllstoffe (z. B. Hydroxide, Silikate, Siliciumdioxid), Pigmente oder Farbstoffe (Farbmasterbatche, Ruß), Hitzeoder UV-Stabilisatoren, Oxidationsinhibitoren, Prozeßhilfsmittel (Silicone, Fluorpolymere), werden ebenfalls zweckmäßig bereits in den Ansatz für die Pfropfungsreaktion gegeben. Man verwendet die für diese Zwecke bekannten Materialien in den üblichen, zweckentsprechenden Mengen.

Die erfindungsgemäßen vernetzbaren Polymere lassen sich absatzweise oder besonders vorteilhaft kontinuierlich in beheizbaren Apparaten herstellen, die eine innige Durchmischung der Komponenten bewirken.

Geeignete Apparate sind z. B. Kneter, Walzenstühle, Spritzgießmaschinen und vorzugsweise beheizbare Ein- oder Zweischneckenextruder. Bei einer Ausführungsform des Verfahrens läßt man vor der Pfropfung einen Radikalbildner, das olefinisch ungesättigte Silan, den Katalysator sowie das Alkylsilan (a) und/oder das Fluoralkylsilan (b) gemeinsam auf das Basispolymer einwirken, gegebenenfalls in Anwesenheit eines Lösemittels. Man kann die genannten Komponenten z. B. in einem Taumelmischer bei einer Temperatur unterhalb des Schmelz- oder Erweichungspunkts des Basispolymers auf dieses einwirken lassen, bis sie von dem Basispolymer absorbiert wurden. Alternativ kann man einen Radikalbildner und/oder das olefinisch ungesättigte Silan und/oder den Katalysator und/oder das Alkylsilan (a) und/oder das Fluoralkylsilan (b) in Form eines Masterbatches in dem Basispolymer einsetzen. Schließlich kann man auch die genannten Additive getrennt vom Basispolymer in den Mischapparat einführen. Das thermoplastische Basispolymer wird, auf die eine oder andere Weise mit den Additiven versehen, in den Mischapparat, vorteilhaft einen beheizbaren Extruder, dosiert und aufgeschmolzen Je nach Schmelz- oder Erweichungstemperatur des Basispolymers, Viskositat der Schmelze und Zerfallstemperatur des gewählten Radikalbildners findet die Pfropfung bei einer Temperatur statt, die im allgemeinen 120 bis 250 °C beträgt. Die Verweilzeit des Reaktionsgemisches beträgt in der Regel 30 Sekunden bis 15 Minuten.

Wegen der Hydrolysierbarkeit der Silangruppen ist es zweckmäßig, möglichst wasserfreie Ausgangsstoffe einzusetzen und unter sorgfältigem Ausschluß von Wasser zu arbeiten.

Das homogene gepfropfte, vernetzbare Polymer kann nach dem Austritt aus der Reaktionszone abgekühlt und nach dem Erstarren in üblicher Weise zerkleinert werden, vorteilhaft zu einem Granulat, das man in einem Folgeschntt, z. B. durch Spritzgießen oder Pressen, in gewünschter Weise formen kann. Alternativ kann man die Schmelze unmittelbar in die für das spätere Formteil gewünschte Form bringen. Das vernetzbare Polymer wird in beiden Fällen unter Ausbildung von -Si-O-Si-Brücken vernetzt Dies gelingt im Prinzip schon durch Einwirkung von Luftfeuchtigkeit bei Raumtemperatur oder mäßig erhöhter Temperatur. Im Interesse akzeptabler Vernetzungszeiten wählt man jedoch vorteilhaft energischere Bedingungen, beispielsweise 2 bis 24 Stunden im Wasserbad von 60 bis 100 °C. Alternativ verwendet man sog. Saunen, in denen das Wasser in Dampfform auf das zu vernetzende Formteil einwirkt. Die so erhaltenen Erzeugnisse zeichnen sich durch hohe Wärmeformbestandigkeit, Spannungsrißbeständigkeit und Abriebbeständigkeitkeit aus. Beispielsweise lassen sich die vernetzbaren Polymere zu Drahtummantelungen für elektrische Kabel, zu Rohren, Schäumen, Spritzgießartikeln und Blasformprodukten verarbeiten

Die Erfindung wird durch die folgenden Beispiele weiter erläutert, nicht aber in ihrem Schutzbereich begrenzt, wie er in den Patentansprüchen dargelegt ist.

### Beispiel 1 (Vergleich)

### Pfropfung im Laborextruder

5 kg lineares Polyethylen niedriger Dichte (PE-LLD; Escorene LLN 1004 YB von EXXON Chemical Europe Inc. (Belgium) (Schmelzindex 2,8g/10min; Dichte 0,918g/cm³) in Granulatform wurden in einem Taumelmischer auf 50 °C erwärmt und mit 1 g Vinyltrimethoxysilan (DYNASYLAN® VTMO von SIVENTO Chemie Rheinfelden GmbH, D-79618 Rheinfelden), 0,1 g Dicumylperoxid (Interox® DCUP von Peroxid-Chemie GmbH, Pullach, DE), 0,05 g Dibutylzinndilaurat (Tinnstab® BL 277 von Arcos Chemicals, Duren, D) und 0,1 g Octyltriethoxysilan (DYNASYLAN® OCTEO von SIVENTO) 60 min vermischt. Die flüssigen Bestandteile der Mischung waren danach von dem Polyethylen absorbiert, und es wurde ein rieselfähiges Granulat erhalten. Die Pfropfreaktion wurde in einem gleichläufig drehenden Zweischneckenextruder (ZE 25 von Hermann Berstorff Maschinenbau GmbH, D-30627 Hannover); Durchmesser 2,5 cm; Länge 82,5 cm) durchgeführt. Der Extruder wurde mit den folgenden Parametern betrieben:
- Temperaturprofil (in °C):
   140 / 150 / 170 / 195 / 200 / 200 / 200 (Kopftemperatur)
- Ausstoß ca. 4 kg/h
Das gepfropfte, vernetzbare Polyethylen wurde in Form eines Bandes von 20 mm Breite und 2 mm Dicke gewonnen.

Zur Vernetzung wurden die Bänder 8 Stunden in Wasser von 80 °C gelagert und zu Prüfzwecken zu Standardprüfkörpern gemäß VDE 207 / IEC 502/540 gestanzt. In Anlehnung an VDE 207 wurden Prüfungen mit den folgenden Ergebnissen durchgeführt:
- Warmedehnung: 40 - 50 %
- Gelgehalt: 67 %
- Zugfestigkeit: 23,7 N/mm²
- Reißdehnung: 1 070 %
Eine Menge gepfropftes, noch unvernetztes Material wurde jeweils auf eine Kupferplatte und eine Aluminiumfolie von jeweils 400 cm² aufgebracht und gepreßt.
Die Einstelldaten der Presse waren:
- Temperatur: 200 °C
- Preßdruck: 750 kg/cm²
- Preßdauer: 5 min

Die Wirkung des mitverwendeten Octyltriethoxysilans wurde in einem weiteren Vergleichsversuch ohne Octyltrimethoxysilan unter sonst gleichen Bedingungen geprüft. Dabei wurden die folgenden Unterschiede festgestellt:
- Bei Mitverwendung des Octyltriethoxysilans war die Neigung des Polymers, bei der Pfropfung im Extruder klebrige Ablagerungen zu bilden, deutlich vermindert. Dementsprechend war der Aufwand für die mechanische Reinigung des Extruders erheblich geringer
- Ohne Octyltriethoxysilan ließ sich das vernetzte Polymer nicht vom Substrat ablosen, ohne daß Kleberuckstände auf der Metalloberflache verblieben Bei Mitverwendung von Octyltrimethoxysilan ließ sich das Polymer glatt, mit deutlich geringerem Kraftaufwand und ohne Kleberückstände ablösen, obwohl Alkylsilane bekanntlich als Haftvermittler zwischen polaren und nicht polaren Materialien dienen

### Beispiel 2 (Vergleich)

### Pfropfung und Ummantelung von Kupferdraht im Produktionsextruder

Es wurde ein 120er Einschneckenextruder (Nokia Maillefer S.A., Lausanne, CH) mit Pfropfungs- und Ummantelungswerkzeug, Barriereschnecke und einem Verhältnis von Länge : Durchmesser = 30 verwendet. Der Extruder wurde mit den folgenden Parametern betrieben:
- PE-LLD-Granulat mit Silanzusatz, wie in Beispiel 1 hergestellt
- Temperaturprofil in °C im Pfropfungswerkzeug:
   Kühlung im Einzug /120 /150 /170 / 220/220
- Temperaturprofil in °C im Ummantelungswerkzeug:
   Einheitlich bis zur Austrittsduse 230
- Die Drehzahl wurde im Bereich von 0 bis 80 U/min variiert, der Ausstoß dementsprechend von 0 bis 400 m Kabel/min. Diese Variation sollte betriebsnahe Zustände mit wechselndem Ausstoß einschließlich von Stillstand bei Materialwechsel simulieren, bei denen erfahrungsgemäß eine besondere Neigung zur Bildung von klebrigen Ablagerungen an Schnecke und Extruderwand besteht.
- Kabeldurchmesser. 3 mm
- Leiterdurchmesser: 1,38 mm (= 1,5 mm² Querschnittsfläche)
Die Wirkung des mitverwendeten Octyltriethoxysilans wurde in einem weiteren Vergleichsversuch ohne Octyltrimethoxysilan unter sonst gleichen Bedingungen geprüft Nach einwöchigem Betrieb wurde die Extruderschnecke "gezogen". Es zeigte sich, daß die Ablagerungen auf den Metalloberflachen bei Mitverwendung von Octyltrimethoxysilan erheblich geringer waren Dementsprechend geringer war der Aufwand für die mechanische Reinigung

### Beispiel 3

### Pfropfung im Laborextruder

5 kg lineares Polyethylen (wie im Beispiel 1) wurden in einem Taumelmischer auf 50 °C erwärmt und mit 1 g Vinyltrimethoxysilan (wie im Beispiel 1), 0,1 g Dicumylperoxid (wie im Beispiel 1), 0,05 g Dibutylzinndilaurat (wie im Beispiel 1) und 0,1 g Tridecafluoroctyltrimethoxysilan (DYNASYLAN® F 8261 von SIVENTO) 60 min vermischt. Die flüssigen Bestandteile der Mischung waren dann von dem Polyethylen absorbiert, und es war ein rieselfähiges Granulat entstanden. Die Pfropfreaktion wurde in dem im Beispiel 1 verwendeten Zweischneckenextruder durchgeführt Das extrudierte Band aus vernetzbarem Polymer wurde wie im Beispiel 1 vernetzt. Die Prüfung des vernetzten Polymers wie im Beispiel 1 ergab die folgenden Werte:

| | |
|---|---|
| Wärmedehnung | 40-50% |
| Gelgehalt | 74 % |
| Zugfestigkeit | 23,2 N/mm² |
| Reißdehnung | 1.095 % |

Unvernetztes Polymer wurde wie im Beispiel 1 auf eine Kupferplatte bzw. Aluminiumfolie aufgepreßt.

Die Wirkung des mitverwendeten Tridecafluoroctyltrimethoxysilans ergab sich durch Vergleich mit den Vergleichsversuchen des Beispiels 1.

Hinsichtlich der klebrigen Ablagerungen auf den Metalloberflächen des Extruders und der Ablösbarkeit des vernetzten Polymers von Kupfer und Aluminium wirkte Tridecafluoroctyltrimethoxysilan wie Octyltrimethoxysilan im Beispiel 1.

## Patentansprüche

1. Verfahren zur Herstellung von vernetzbaren, Silangruppen mit mindestens einem hydrolysierbaren Rest enthaltenden Polymeren durch radikalisch initiierte Pfropfung der Basispolymeren mit einem olefinisch ungesättigten Silan mit mindestens einem hydrolysierbaren Rest,
**dadurch gekennzeichnet,**
**daß** man die Pfropfung
(a) in Gegenwart eines Alkylsilans der Formel I,
R¹(SiR² ₙX₃₋ₙ)ₘ, (I)
in der
R¹ einen einwertigen Kohlenwasserstoffrest mit 1 bis 33 Kohlenstoffatomen oder einen zweiwertigen Kohlenwasserstoffrest mit 4 bis 24 Kohlenstoffatomen,
R² einen Kohlenwasserstoffrest mit 1 bis 10 Kohlenstoffatomen,
X gleiche oder verschiedene hydrolysierbare Reste,
n 0, 1 oder 2 und
m 1 oder 2 bedeutet,
und
eines Fluoralkylsilans der allgemeinen Formel
R³ ₓSiR⁴ _{y}X_{z}, (II)
in der
R³ einen Fluoralkylrest,
R⁴ einen Alkylrest und
X einen hydrolysierbaren Rest bedeutet,
x für eine ganze Zahl von 1 bis 3,
y für 0, 1 oder 2 und
z für eine ganze Zahl von 1 bis 3 steht,
mit der Maßgabe, daß die Summe x + y + z = 4 ist,
oder
(b) in Gegenwart eines Fluoralkylsilans der allgemeinen Formel
R³ ₓSiR⁴ _{y}X_{z}, (II)
in der
R³ einen Fluoralkylrest,
R⁴ einen Alkylrest und
X einen hydrolysierbaren Rest bedeutet,
x für eine ganze Zahl von 1 bis 3,
y für 0, 1 oder 2 und
z für eine ganze Zahl von 1 bis 3 steht,
mit der Maßgabe, daß die Summe x + y + z = 4 ist,
durchführt.

2. Verfahren nach Anspruch 1,
**dadurch gekennzeichnet,**
**daß** man die Pfropfung in Gegenwart eines Katalysators für Silanolverknüpfung durchfuhrt.

3. Verfahren nach Anspruch 1 oder 2,
**dadurch gekennzeichnet,**
**daß** man vor der Pfropfung einen Radikalbildner, das olefinisch ungesättigte Silan, den Katalysator sowie (a) das Alkylsilan und das Fluoralkylsilan oder (b) das Fluoralkylsilan gemeinsam auf das Basispolymer einwirken laßt.

4. Verfahren nach Anspruch 1 oder 2,
**dadurch gekennzeichnet,**
**daß** man einen Radikalbildner und/oder das olefinisch ungesättigte Silan und/oder den Katalysator und/oder (a) das Alkylsilan und das Fluoralkylsilan oder (b) das Fluoralkylsilan in Form eines Masterbatches in dem Basispolymer einsetzt.

5. Verfahren nach einem der Anspruche 1 bis 3,
**dadurch gekennzeichnet,**
**daß** man die Pfropfreaktion in einem beheizbaren Ein- oder Zweischneckenextruder durchführt.

6. Vernetzbare, Silangruppen mit mindestens einem hydrolysierbaren Rest sowie (a) ein Alkylsilan und ein Fluoralkylsilan oder (b) ein Fluoralkylsilan gemäß Anspruch 1 enthaltende Polymere.

7. Vemetzbare Polymere nach Anspruch 6,
**dadurch gekennzeichnet,**
**daß** sie einen Katalysator für die Silanolkondensation enthalten.

8. Verfahren zur Herstellung von Formkörpern auf der Basis von über Siloxanbrücken (-Si-O-Si-) vernetzten Polymeren,
**dadurch gekennzeichnet,**
**daß** man die in die gewünschte Form gebrachten vernetzbaren, Silangruppen mit mindestens einem hydrolysierbaren Rest enthaltenden Polymeren nach einem der Anspruche 1 bis 5 mit Wasser behandelt

9. Formkorper, erhältlich nach dem Verfahren des Anspruchs 8.

## Revendications

1. Procédé de production de polymères contenant des groupes silane ayant au moins un reste hydrolysable, réticulables, par greffage déclenché par voie radicalaire des polymères de base, avec un silane non saturé oléfiniquement ayant au moins un reste hydrolysable,
**caractérisé en ce qu'**
on effectue le greffage
a) en présence d'un alkylsilane de formule I
R¹(SiR² ₙX₃₋ₙ)ₘ (I)
dans laquelle
R¹ signifie un reste hydrocarboné monovalent ayant de 1 à 33 atomes de carbone ou un reste hydrocarboné divalent ayant de 4 à 24 atomes de carbone,
R² signifie un reste hydrocarboné ayant de 1 à 10 atomes de carbone,
X signifie des restes hydrolysables identiques ou différents,
n signifie 0, 1 ou 2 et
m signifie 1 ou 2,
et d'un fluoroalkylsilane de formule générale
R³ ₓSiR⁴ _{y}X_{z}, (II)
dans laquelle
R³ signifie un reste fluoroalkyle,
R⁴ signifie un reste alkyle et
X signifie un reste hydrolysable,
x représente un nombre entier allant de 1 à 3,
y représente 0, 1 ou 2 et
z représente un nombre entier allant de 1 à 3,
avec la précision que la somme x + y + z est égale à 4
b) en présence d'un fluoroalkylsilane de formule générale
R³ ₓSiR⁴ _{y}X_{z}, (II)
dans laquelle R³ signifie un reste fluoroalkyle
R⁴ signifie un reste alkyle et
X signifie un reste hydrolysable,
x représente un nombre entier allant de 1 à 3,
y représente 0, 1 ou 2 et
z représente un nombre entier allant de 1 à 3,
avec la précision que la somme x + y + z est égale à 4.

2. Procédé selon la revendication 1,
**caractérisé en ce qu'**
on effectue le greffage en présence d'un catalyseur pour le couplage d'un silanol.

3. Procédé selon la revendication 1 ou la revendication 2,
**caractérisé en ce qu'**
on fait réagir avant le greffage un agent formateur de radicaux qui renferme un silane non saturé oléfiniquement, le catalyseur ainsi que a) l'alkylsilane et le fluoroalkylsilane ou bien b) le fluoroalkylsilane conjointement sur le polymère de base.

4. Procédé selon la revendication 1 ou la revendication 2,
**caractérisé en ce qu'**
on met en oeuvre un agent formateur de radicaux et/ou le silane non saturé oléfiniquement et/ou le catalyseur et/ou a) l'alkylsilane et le fluoroalkylsilane ou b) le fluoroalkylsilane sous la forme d'un lot principal (masterbatch) dans le polymère de base.

5. Procédé selon l'une des revendications 1 à 3,
**caractérisé en ce qu'**
on effectue la réaction de greffage dans une extrudeuse chauffable à une ou à deux vis.

6. Groupes silane réticulables ayant au moins un reste hydrolysable ainsi que des polymères contenant
a) un alkysilane et un fluoroalkysilane ou
b) un fluoroalkylsilane
conformément à la revendication 1.

7. Polymères réticulables selon la revendication 6,
**caractérisés en ce qu'**
ils renferment un catalyseur pour la condensation d'un silanol.

8. Procédé de production de corps moulés à base de polymères réticulés par l'intermédiaire de ponts siloxane (Si-O-Si-),
**caractérisé en ce que**
si l'un des groupes silane réticulables, amenés sous la forme désirée, ayant des polymères contenant au moins un reste hydrolysable selon l'une des revendications 1 à 5, sont traités avec de l'eau.

9. Corps moulés, obtenus selon le procédé de la revendication 8.

## Claims

1. A process for preparing crosslinkable polymers containing silane groups having at least one hydrolysable radical by free-radical-initiated grafting of the base polymers with an olefinically unsaturated silane having at least one hydrolysable radical, **characterized in that** the grafting is carried out
in the presence of
(a) an alkylsilane of the formula I,
R¹ (SiR² ₙX₃₋ₙ)ₘ, (I)
where
R¹ is a monovalent hydrocarbon radical having from 1 to 33 carbon atoms or a divalent hydrocarbon radical having from 4 to 24 carbon atoms,
R² is a hydrocarbon radical having from 1 to 10 carbon atoms,
X are identical or different hydrolysable radicals,
n is 0, 1 or 2 and
m is 1 or 2
and
a fluoroalkylsilane of the formula
R³ ₓSiR⁴ _{y}X_{z}, (II)
where
R³ is a fluoroalkyl radical,
R⁴ is an alkyl radical and
X is a hydrolysable radical,
x is an integer from 1 to 3,
y is 0, 1 or 2 and
z is an integer from 1 to 3,
with the proviso that the sum x + y + z = 4,
or
(b) in the presence of a fluoroalkylsilane of the formula
R³ ₓSiR⁴ _{y}X_{z}, (II)
where
R³ is a fluoroalkyl radical,
R⁴ is an alkyl radical and
X is a hydrolysable radical,
x is an integer from 1 to 3,
y is 0, 1 or 2 and
z is an integer from 1 to 3,
with the proviso that the sum x + y + z = 4.

2. A process according to claim 1, **characterized in that** grafting is carried out in the presence of a catalyst for silanol linkage.

3. A process according to claim 1 or 2, **characterized in that** a free-radical initiator, the olefinically unsaturated silane, the catalyst and (a) the alkylsilane and the fluoroalkylsilane or (b) the fluoroalkylsilane are allowed to act together on the base polymer prior to grafting.

4. A process according to claim 1 or 2, **characterized in that** a free-radical initiator and/or the olefinically unsaturated silane and/or the catalyst and/or (a) the alkylsilane and the fluoroalkylsilane or (b) the fluoroalkylsilane are used in the form of a masterbatch in the base polymer.

5. A process according to any one of claims 1 to 3, **characterized in that** the grafting reaction is carried out in a heatable single- or twin-screw extruder.

6. A crosslinkable polymer containing silane groups having at least one hydrolysable radical and also (a) an alkylsilane and a fluoroalkylsilane or (b) a fluoroalkylsilane according to claim 1.

7. A crosslinkable polymer according to claim 6, **characterized in that** it contains a catalyst for silanol condensation.

8. A process for producing mouldings based on polymers crosslinked via siloxane bridges (-Si-O-Si-), **characterized in that** it comprises treating the crosslinkable polymers containing silane groups having at least one hydrolysable radical according to any one of claims 1 to 5 which have been brought to the desired shape with water.

9. A moulding obtainable by the process according to claim 8.
